# EUROPÄISCHE PATENTSCHRIFT

(11) **EP 1 794 948 B1**
(45) Veröffentlichungstag und Bekanntmachung des Hinweises auf die Patenterteilung: **29.05.2013**
(21) Anmeldenummer: 05797046.9
(22) Anmeldetag: 22.09.2005
(51) Int. Cl.: H04W 8/24, H04L 29/08, H04W 84/04, H04W 84/22, H04W 88/04, H04W 88/06

(54) **VERFAHREN ZUM VERTEILEN VON DATEN AUF ANFORDERUNG SOWIE ENTSPRECHENDES DATENNETZ**
METHOD FOR THE DISTRIBUTION OF DATA UPON REQUEST, AND CORRESPONDING DATA NETWORK
PROCEDE DE DISTRIBUTION DE DONNEES SUR DEMANDE ET RESEAU DE DONNEES CORRESPONDANT

(30) Priorität: 29.09.2004 DE 102004047366
(43) Veröffentlichungstag der Anmeldung: 13.06.2007
(73) Patentinhaber: Siemens Enterprise Communications GmbH & Co. KG, 81379 München (DE)
(72) Erfinder: BITTERLICH, Jean-Yves, 81549 München (DE)
(74) Vertreter: Fritzsche, Thomas
(86) Internationale Anmeldenummer: PCT/EP2005/054745
(87) Internationale Veröffentlichungsnummer: WO 2006/034988

(56) Entgegenhaltungen:
- EP-A- 1 398 910
- EP-A- 1 401 224
- US-A- 5 790 536
- MOESSNER K ET AL: "SOFTWARE DOWNLOAD ENABLING TERMINAL RECONFIGURABILITY TELECHARGEMENT DE LOGICIEL POUR LA RECONFIGURATION DE TERMINAL" ANNALES DES TELECOMMUNICATIONS - ANNALS OF TELECOMMUNICATIONS, GET LAVOISIER, PARIS, FR, Bd. 57, Nr. 5/6, Mai 2002 (2002-05), Seiten 457-479, XP001122781 ISSN: 0003-4347
- WEI H-Y ET AL: "TWO-HOP-RELAY ARCHITECTURE FOR NEXT-GENERATION WWAN/WLAN INTEGRATION" IEEE WIRELESS COMMUNICATIONS, IEEE SERVICE CENTER, PISCATAWAY, NJ, US, Bd. 11, Nr. 2, April 2004 (2004-04), Seiten 24-30, XP001196396 ISSN: 1536-1284

## Beschreibung

Die vorliegende Erfindung betrifft ein Verfahren zum Verteilen von Daten, insbesondere Software und/oder Konfigurationsdaten, in einem Datennetz mit mehreren Teilnehmern, die ad hoc-netzwerkfähig sind. Darüber hinaus betrifft die vorliegende Erfindung ein entsprechendes Datennetz mit ad hocnetzwerkfähigen Teilnehmern und einer Zentraleinrichtung zum Verteilen der Daten.

Die Software-Verwaltung spielt eine zentrale Rolle bei jedem Mobilfunknetzbetreiber bzw. Netzwerk-Operator. Bei mehreren Millionen Teilnehmern sehen sich die Betreiber bzw. Operatoren einem enormen Problem gegenüber: Das Ändern und Aktualisieren von Konfigurationen soll bei allen Terminals gleichzeitig oder in einem überschaubaren zeitlichen Rahmen erfolgen können. Während sich die Standardisierungsgremien darauf konzentrieren, wie das Aktualisieren und Ändern der Konfigurationen auf der Netzwerkseite zu managen und auf der Terminalseite durchzuführen ist, wird grundsätzlich offen gelassen, wie die Betreiber und Operatoren die Vielzahl an Triggern und Verbindungen für die Aktualisierungen und Änderungen handhaben sollen.

Bei dem Software-Management gemäß dem "SyncML/DM", einem Standard der OMA, erfolgt die Softwareverteilung gegebenenfalls mit Hilfe eines SMS-Triggers. Der Operator sendet eine SMS an Millionen von Terminals um sie zu triggern bzw. aufzufordern, einen Konfigurations-Management-Server zu kontaktieren. Diese Lösung ist jedoch sehr teuer und braucht eine sehr hohe Bandbreite.

Bei dem Datennetz "Enterprise Networking" gibt es mehrere SNMP-basierte Lösungen entsprechend einem Standard der IETF.

Dabei reagieren einzelne Stationen auf bestimmte Gruppenruf-oder Sammelruf-Datenpakete (multicast/broadcast pakets). Diese Lösung ist zweckmäßig bei kleinen Netzwerken, aber nicht günstig für ein Netzwerk der Größe von Mobilfunkbetreibern.

In Dokument XP 001 122 781 ist ein Softwaredownload-Algorithmus beschrieben, der ein Download von Konfigurationssoftware über verschiedene Medien zu beweglichen Terminals ermöglicht. [XP001122781: MOESSNER K ET AL: "SOFTWARE DOWNLOAD ENABLING TERMINAL RECONFIGURABILIITY TELECHARGEMENT DE LOGICIEL POUR LA RECONFIGURATION DE TERMINAL" ANNALES DES TELECOMMUNICATIONS - ANNALS OF TELECOMMUNICATIONS, GET LAVOISIER, PARIS, FR, Bd. 57, Nr. 5/6, Mai 2002 (2002-05), Seiten 457-479, ISSN: 0003-4347.]

In Dokument US 5,790,536 ist ein hierarchisches Kommunikationssystem beschrieben, das in einer überspannenden Baumkonfiguration angeordnet ist, wobei drahtgebundene und drahtlose Kommunikationsnetze verwendet werden um tragbare oder mobile Rechenvorrichtungen miteinander zu verbinden. Kopien von Daten, von Programmcode und von Verarbeitungsressourcen werden von ihrer Quelle in Richtung anfragender Ziele geleitet, basierend auf der Anforderungshäufigkeit, den Kommunikationsverbindungskosten und vorhandenem örtlichen Speicher und/oder Verarbeitungsressourcen.

Die Aufgabe der vorliegenden Erfindung besteht somit darin, ein Verfahren bereitzustellen, mit dem eine Aktualisierung bzw. Änderung der Konfigurationen einer Vielzahl von Terminals einfacher durchgeführt werden kann. Darüber hinaus soll ein entsprechendes Datennetz angegeben werden.

Erfindungsgemäß wird diese Aufgabe gelöst durch ein Verfahren nach Anspruch 1 zum Verteilen von Daten, insbesondere Software und/oder Konfigurationsdaten, in einem Datennetz mit mehreren mobilen Teilnehmern, die ad hoc-netzwerkfähig sind, durch Senden der Daten von einer Zentralstelle an einen mobilen ersten der mehreren mobilen Teilnehmer, Aufbauen einer spontanen Kommunikationsverbindung zwischen dem ersten mobilen und einem zweiten mobilen Teilnehmer und Anfordern der Daten oder eines Teils davon durch den zweiten mobilen Teilnehmer von dem ersten mobilen Teilnehmer, wobei das Anfordern der Daten automatisch durch den zweiten mobilen Teilnehmer erfolgt, wenn er mit dem ersten mobilen Teilnehmer die spontane Kommunikation aufbaut, und
wobei das Verteilen der Daten einen aktualisierten Satz an Parametern umfasst und an eine kritische und gut verteilte Masse von mobilen ersten Teilnehmern unter Ausnutzen der bekannten Gerätepositionen erfolgt.

Darüber hinaus wird die Aufgabe auch gelöst durch das Datennetz nach Anspruch 6 mit mindestens einem ersten und einem zweiten mobilen Teilnehmer, die ad hoc-netzwerkfähig sind, und einer Zentraleinrichtung zum Verteilen von Daten, insbesondere von Software und/oder Konigurationsdaten, wobei von der Zentraleinrichtung die Daten an den ersten mobilen Teilnehmer übertragbar sind, zwischen dem ersten mobilen und zweiten mobilen Teilnehmer eine spontane Kommunikationsverbindung aufbaubar ist und die Daten oder Teile davon direkt von dem ersten mobilen Teilnehmer durch den zweiten mobilen Teilnehmer über die spontane Kommunikationsverbindung anforderbar sind, wobei die Daten automatisch von dem ersten mobilen Teilnehmer durch den zweiten mobilen Teilnehmer anforderbar sind, wenn die beiden mobilen Teilnehmer eine spontane Kommunikation aufbauen, und
wobei das Verteilen der Daten einen aktualisierten Satz an Parametern umfasst und an eine kritische und gut verteilte Masse von mobilen ersten Teilnehmern unter Ausnutzen der bekannten Gerätepositionen erfolgt.

In vorteilhafter Weise ist es damit möglich, dass die Betreiber und Operatoren nicht mehr alle Geräte bzw. Teilnehmer für die Aktualisierungen und Änderungen der Konfigurationen bzw. Software triggern müssen. Sie müssen lediglich einer Untermenge von Teilnehmern vorzugsweise in ausgewählten Funkzellen, Software oder Konfigurationsdaten zusenden. Die Daten werden durch spontane Kommunikation, d.h. ad hoc-Netzwerke, weiter verteilt. Dies erspart Energie und Bandbreite und mithin Geld.

Das Anfordern der Daten oder eines Teils davon durch den zweiten Teilnehmer und das anschließende Senden der Daten durch den ersten Teilnehmer kann automatisch erfolgen, wenn die beiden Teilnehmer die spontane Kommunikation bzw. das ad hoc-Netzwerk aufbauen. Dies bedeutet, dass der zweite Teilnehmer der aktive Part ist und der erste Teilnehmer lediglich zu prüfen hat, ob er über die angeforderten Daten verfügt, um sie zu senden. Besonders vorteilhaft ist diese Pull-Methode zur Beschaffung der Daten für eine erste Initialisierung eines Geräts. Wenn das neue Gerät von einem bestimmten Betreiber erworben wird, wird es beim Einschalten versuchen, alle Betreiber-Konfigurationsparameter und möglicherweise andere Aktualisierungsdaten von benachbarten Geräten, die auch über den gleichen Betreiber laufen, zu erhalten. Die angeforderten Daten sind beispielsweise WAP-Daten, GPRS-Daten, Zeitinformationen, Datumsinformationen und andere Parameter. Diese Selbst-Konfiguration ist insbesondere für der Betreiber nützlich, da er dann nicht aktiv zu werden braucht.

Sobald einer der mehreren Teilnehmer über einen vollständigen Datensatz verfügt, kann bei ihm eine Installation oder ein Setup gestartet werden. Dadurch muss sich der Teilnehmer nicht mit Installationen und Setups abmühen.

Vorzugsweise wird die spontane Kommunikation mit einer Sicherheitseinrichtung überprüft. Hierzu kann speziell eine Signatur der Zentralstelle bzw. des Operators oder eines Geräteherstellers beispielsweise von Mobiltelefonen übermittelt werden. Auf diese Weise kann für Installationsprozeduren eine erhöhte Sicherheit bezüglich der Authentizität der Daten gewährleistet werden.

Die spontane Kommunikation kann mittels Bluetooth, drahtlosem USB oder WLAN aufgebaut werden. Somit kann auf bekannte Standards zurückgegriffen werden.

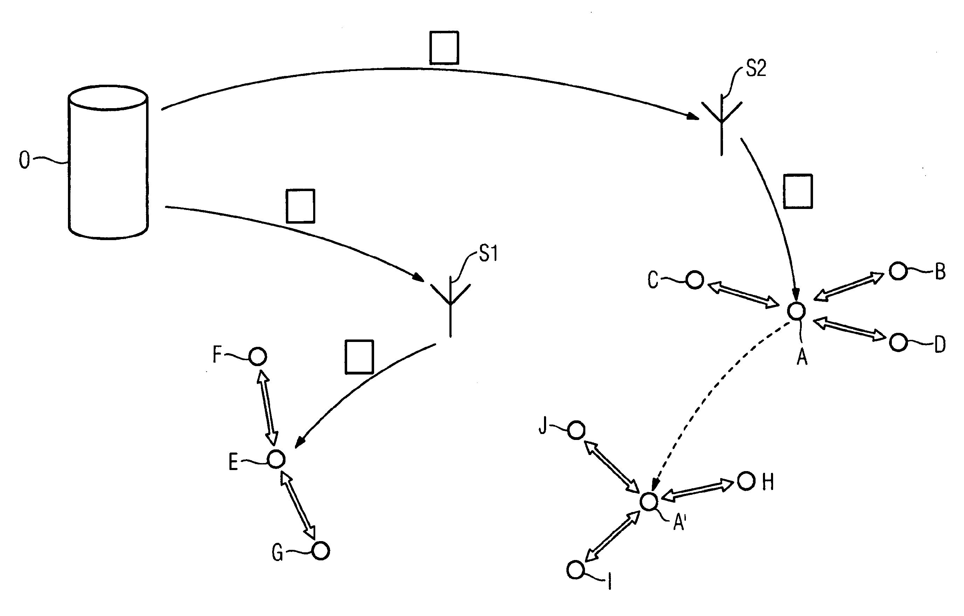

Die vorliegende Erfindung wird nun anhand der beigefügten Zeichnung näher erläutert, die ein erfindungsgemäßes Datennetz prinzipiell widerspiegelt.

Das nachfolgend näher geschilderte Ausführungsbeispiel stellt eine bevorzugte Ausführungsform der vorliegenden Erfindung dar.

Die erfindungsgemäße Lösung basiert auf einem P2P-Software-Management-Verteilungs-Prinzip (peer to peer). Dabei werden Daten, die für die Aktualisierung oder Änderung der Software bzw. Konfiguration notwendig sind, von einer Zentrale über ein großflächiges Datennetz an "ausgewählte" Geräte gesendet und anschließend über ad hoc-Netzwerke durch spontane Kommunikation von den "ausgewählten" Geräten an weitere Geräte auf Anforderung weitergegeben.

Dies bedeutet, dass das Verteilungsprinzip analog dem Ausbreitungsphänomen von Viren gestaltet ist. Darüber hinaus wird die Tatsache ausgenutzt, dass spontane Kommunikationsverbindungen kurzer Reichweite für immer mehr Mobilfunktelefone vorgesehen werden.

Die Grundidee für die erfindungsgemäße Datenverteilung ist, einen aktualisierten Satz an Parametern bzw. eine neue Konfiguration an eine kritische und gut verteilte Masse von Geräten unter Ausnutzung der bekannten Gerätepositionen zu senden. Als Geräteposition genügt beispielsweise die Position einer Zelle, in der sich das Mobilfunkgerät befindet.

Es ist davon auszugehen, dass sich die Teilnehmer innerhalb der Zelle bewegen und gegebenenfalls die Zelle verlassen. Wenn die Teilnehmer immer wieder spontane Kommunikation mit benachbarten Teilnehmern ausführen, verbreitet sich auf diese Weise die "Nachricht" bzw. neue Konfiguration. Hierzu müssen die Terminals selbstverständlich dazu ausgelegt sein, die Nachricht von anderen Geräten anzufordern bzw. an andere Geräte weiterzugeben. Als Verbindungstechnologien eignen sich beispielsweise Bluetooth, WLAN, drahtloses USB usw.

Für die spontane Kommunikation ist auch die Sicherheit in der Regel von höchster Bedeutung. Es muss sichergestellt sein, dass die Daten von einer authentischen Quelle stammen. Hierzu kann beispielsweise jede Verbindung und jeder Datenaustausch zwischen Terminals durch eine anerkannte Signatur des Betreibers bzw. Operators oder des Herstellers geschützt werden.

In vorteilhafter Weise kann das erfindungsgemäße Verfahren auf zwei verschiedenen logischen Ebenen durchgeführt werden: Der Operator-Ebene und der Terminal-Ebene. Dies bedeutet, dass auf der Operator-Ebene operatorspezifische Daten der Netzbetreiber verbreitet werden können. Andererseits können hersteller- bzw. terminalspezifische Daten auf der Terminal-Ebene verbreitet werden.

Das erfindungsgemäße Verfahren kann unabhängig von der Verbreitungsebene sowohl für einfache Parameter als auch für komplexe Daten Verwendung finden.

In dem Beispiel der Figur stellt der Operator O einen Datensatz zur Verfügung, mit dem die Teilnehmer A bis J eines Mobilfunknetzes neu konfiguriert werden sollen.

Der Datensatz ist in der Figur mit einem Rechteck symbolisiert. Er ist virenartig an alle Teilnehmer A bis J zu verteilen. In dem konkreten Beispiel sendet der Operator O den Datensatz jeweils an eine Sendestation S1 und eine Sendestation S2 (durchgezogene Pfeile in der Figur). Der Einfachheit halber wurden lediglich zwei Sendestationen, die beispielsweise jeweils eine Zelle versorgen, dargestellt. Die Sendestation S1 sendet über das Datennetz den Datensatz zu einem Teilnehmer bzw. Terminal E (ebenfalls durchgezogener Pfeil). In gleicher Weise sendet die Sendestation S2 den Datensatz an einen Teilnehmer A. Weitere Teilnehmer des Netzes prüfen beispielsweise in regelmäßigen zeitlichen Abständen, ob aktuelle Konfigurationsdaten verfügbar sind. Dazu bauen sie mit benachbarten Teilnehmern bzw. Geräten spontane Kommunikationsverbindungen auf. Im konkreten Fall bauen die Teilnehmer B, C und D mit dem Teilnehmer A und die Teilnehmer F und G mit dem Teilnehmer E jeweils eine spontane Kommunikation auf. Sie fordern den jeweiligen Teilnehmer A bzw. E auf, ihnen aktuelle Datensätze zu senden. Da beide Teilnehmer A und E über die aktuellen Datensätze verfügen, können sie den anfordernden Teilnehmern B, C, D, F und G die aktuellen Datensätze senden.

Selbstverständlich können die Anforderungen unterschiedlich sein. Verfügt beispielsweise der anfordernde Teilnehmer F über eine andere Softwareversion als der anfordernde Teilnehmer G, so ist es in der Regel notwendig, dass beide unterschiedliche Datensätzen von dem Teilnehmer E anfordern. Insofern müssen die Daten, die der Operator an den ersten Teilnehmer E sendet, nicht mit den Daten übereinstimmen, die der Teilnehmer F oder der Teilnehmer G von dem Teilnehmer E anfordert.

Voraussetzung für die Verbreitung des Datensatzes ist, dass sich die einzelnen Teilnehmer bewegen, wie dies oben bereits geschildert wurde. Im vorliegenden Beispiel bewegt sich der Teilnehmer A zu einer Position A' (gestrichelter Pfeil in der Figur). Dort gerät er in die Nähe der Teilnehmer H, I und J, die mit ihm eine spontane Kommunikationsverbindung geringer Reichweite (Short Range) aufbauen. Über diese Verbindungen fordern die Teilnehmer H, I und J an und überträgt der Teilnehmer A bzw. A' die Datensätze oder Teile davon auch an diese Teilnehmer H, I und J.

Die Verbreitung des Datensatzes erfolgt erfindungsgemäß also dadurch, dass ein Teilnehmer, der im Besitz des zu verbreitenden Datensatzes ist, diesen auf Anforderung an benachbarte Teilnehmer weitergibt. Falls der durch die spontane Kommunikation angesprochene Teilnehmer nicht über den angeforderten Datensatz verfügt, wird er den Datensatz von dem nächsten Teilnehmer anfordern, der in seine Nähe kommt.

Die Triggerung für das Anfordern kann beispielsweise dadurch geschehen, dass in zeitlich regelmäßigen Abständen eine Anforderung durchgeführt wird. Das Anfordern kann aber auch zu einem speziellen Datum ggf. häufiger durchgeführt werden. Am wenigsten energiesparend wäre die Methode, stets eine Anforderung durchzuführen, wenn eine Verbindung über ein ad hoc-Netzwerk hergestellt wird.

### Bezugszeichenliste

- A-J: Teilnehmer
- A': Teilnehmer an neuer Position
- O: Operator
- S1, S2: Sendestationen

## Patentansprüche

1. Verfahren zum Verteilen von Daten, insbesondere Software und/oder Konfigurationsdaten, in einem Datennetz mit mehreren mobilen Teilnehmern (A bis J), die ad hoc-netzwerkfähig sind, **gekennzeichnet durch**
- Senden der Daten von einer Zentralstelle (O) an einen mobilen ersten (A, E) der mehreren mobilen Teilnehmer,
- Aufbauen einer spontanen Kommunikationsverbindung zwischen dem ersten mobilen (A, E) und einem zweiten mobilen Teilnehmer (B, C, D, F, G) und
- Anfordern der Daten oder eines Teils davon **durch** den zweiten mobilen Teilnehmer (B, C, D, F, G) von dem ersten mobilen Teilnehmer (A, E),
- wobei das Anfordern der Daten automatisch **durch** den zweiten mobilen Teilnehmer (B, C, D, F, G) erfolgt, wenn er mit dem ersten mobilen Teilnehmer (A, E) die spontane Kommunikation aufbaut, und
- wobei das Verteilen der Daten einen aktualisierten Satz an Parametern umfasst und an eine kritische und gut verteilte Masse von mobilen ersten Teilnehmern (A, E) unter Ausnutzen der bekannten Gerätepositionen erfoigt.

2. Verfahren nach Anspruch 1, mit dem weiteren Schritt des Startens einer Installation oder eines Setups, wenn einer der mehreren mobilen Teilnehmer die Daten vollständig übertragen bekommen hat.

3. Verfahren nach einem der vorhergehenden Ansprüche, wobei die spontane Kommunikation mit benachbarten mobilen Teilnehmern mittels Bluetooth, drahtlosem USB oder WLAN aufgebaut wird.

4. Verfahren nach einem der vorhergehenden Ansprüche, wobei die spontane Kommunikation mit einer Sicherheitseinrichtung
überprüft wird.

5. Verfahren nach Anspruch 4, wobei bei der spontanen Kommunikation eine Signatur der Zentralstelle (0) oder eines Geräteherstellers übermittelt wird.

6. Datennetz mit
- mindestens einem ersten mobilen (A, E) und einem zweiten mobilen Teilnehmer (B, C, D, F, G), die ad hoc-netzwerkfähig sind, und
- einer Zentraleinrichtung (O) zum Verteilen von Daten, insbesondere von Software und/oder Konfigurationsdaten,
**dadurch gekennzeichnet, dass**
- von der Zentraleinrichtung (O) die Daten an den ersten (A, E) mobilen Teilnehmer übertragbar sind,
- zwischen dem ersten mobilen und zweiten mobilen Teilnehmer eine spontane Kommunikationsverbindung aufbaubar ist und
- die Daten oder Teile davon direkt von dem ersten mobilen Teilnehmer (A, E) durch den zweiten mobilen Teilnehmer (B, C, D, F, G) über die spontane Kommunikationsverbindung anforderbar sind,
- wobei die Daten automatisch von dem ersten mobilen Teilnehmer (A, E) durch den zweiten mobilen Teilnehmer (B, C, D, F, G) anforderbar sind, wenn die beiden mobilen Teilnehmer eine spontane Kommunikation aufbauen, und
- wobei das Verteilen der Daten einen aktualisierten Satz an Parametern umfasst und an eine kritische und gut verteilte Masse von mobilen ersten Teilnehmern (A, E) unter Ausnutzen der bekannten Gerätepositionen erfolgt.

7. Datennetz nach Anspruch 6, wobei in einem der mobilen Teilnehmer eine Installation oder ein Setup automatisch startbar ist, wenn der mobile Teilnehmer die Daten vollständig übertragen bekommen hat.

8. Datennetz nach einem der Ansprüche 6 oder 7, wobei die spontane Kommunikation zwischen den mobilen Teilnehmern mittels Bluetooth, drahtlosem USB oder WLAN aufbaubar ist.

9. Datennetz nach einem der Ansprüche 6 bis 8, das eine Sicherheitseinrichtung aufweist, mit der die spontane Kommuni kation überprüfbar ist.

10. Datennetz nach Anspruch 9, wobei bei der spontanen Kom munikation eine Signatur der Zentralstelle (O) oder eines Geräteherstellers übertragbar ist.

## Claims

1. A method for the distribution of data, in particular software and/or configuration data, in a data network comprising a plurality of mobile users (A to J) who are ad hoc network compatible, **characterised by**
- sending the data from a central office (O) to a mobile first (A, E) of the plurality of mobile users,
- establishing a spontaneous communication link between the first mobile (A, E) and a second mobile user (B, C, D, F, G) and
- requesting the data or part thereof by the second mobile user (B, C, D, F, G) from the first mobile user (A, E),
- with the requesting of the data being automatically effected by the second mobile user (B, C, D, F, G) when he establishes the spontaneous communication link with the first mobile user (A, E), and
- with the distribution of the data comprising an updated set of parameters and being effected to a critical and well distributed mass of mobile first users (A, E) utilising the known device positions.

2. A method according to claim 1, having the additional step of the starting of an installation or of a setup when one of the plurality of mobile users has received the complete data transmission.

3. A method according to any one of the preceding claims wherein the spontaneous communication with neighbouring mobile users is established by way of Bluetooth, wireless USB or WLAN.

4. A method according to any one of the preceding claims wherein the spontaneous communication is tested with a safety device.

5. A method according to claim 4 wherein a signature of the central office (O) or of a device manufacturer is transmitted during the spontaneous communication.

6. A data network having
- at least one first mobile (A, E) and one second mobile user (B, C, D, F, G) who are ad hoc network compatible, and
- a central device (O) for the distribution of data, in particular software and/or configuration data, **characterised in that**
- the data can be transmitted from the central device (O) to the first (A, E) mobile user,
- a spontaneous communication link can be established between the first mobile and second mobile user and
- the second mobile user (B, C, D, F, G) can request the data or parts thereof directly from the first mobile user (A, E) via the spontaneous communication link,
- with the data being automatically requestable from the first mobile user (A, E) by the second mobile user (B, C, D, F, G) when the two mobile users establish a spontaneous communication, and
- with the distribution of the data comprising an updated set of parameters and being effected to a critical and well distributed mass of mobile first users (A, E) utilising the known device positions.

7. A data network according to claim 6 wherein an installation or a setup can be automatically started in one of the mobile users when the mobile user has received the complete data transmission.

8. A data network according to either of claims 6 or 7 wherein the spontaneous communication can be established between the mobile users by way of Bluetooth, wireless USB or WLAN.

9. A data network according to any one of claims 6 to 8 which exhibits a safety device with which the spontaneous communication can be tested.

10. A data network according to claim 9 wherein a signature of the central office (O) or of a device manufacturer can be transmitted during the spontaneous communication.

## Revendications

1. Procédé servant à distribuer des données, en particulier des données relatives à des logiciels et/ou à des configurations, dans un réseau de données comportant plusieurs abonnés mobiles (A à J), lesquels sont compatibles avec le réseau ad hoc,
**caractérisé par**
- l'envoi des données depuis un poste central (O) à un premier abonné mobile (A, E) parmi les plusieurs abonnés mobiles,
- l'établissement d'une liaison de communication spontanée entre le premier abonné mobile (A, E) et un deuxième abonné mobile (B, C, D, F, G), et
- la demande des données ou d'une partie de ces dernières par le deuxième abonné mobile (B, C, D, F, G) au premier abonné mobile (A, E),
- sachant que les données sont automatiquement demandées par le deuxième abonné mobile (B, C, D, F, G), lorsque ce dernier établit la communication spontanée avec le premier abonné mobile (A, E), et
- sachant que la distribution des données comporte un jeu de paramètres mis à jour et se fait au niveau d'une masse critique et correctement répartie de premiers abonnés mobiles (A, E) en utilisant les positions des appareils connues.

2. Procédé selon la revendication 1, comportant l'étape supplémentaire consistant à démarrer une installation ou une préparation, lorsqu'un abonné mobile parmi les nombreux abonnés mobiles se voit transmettre intégralement les données.

3. Procédé selon l'une quelconque des revendications précédentes, sachant que la communication spontanée avec des abonnés mobiles adjacents est établie au moyen du Bluetooth, d'un USB ou d'un réseau LAN sans fil.

4. Procédé selon l'une quelconque des revendications précédentes, sachant que la communication spontanée est vérifiée avec un dispositif de sécurité.

5. Procédé selon la revendication 4, sachant qu'une signature du poste central (O) ou d'un fabricant d'appareils est transmise dans le cadre de la communication spontanée.

6. Réseau de données comportant
- au moins un premier abonné mobile (A, E) et un deuxième abonné mobile (B, C, D, F, G), lesquels sont compatibles avec le réseau ad hoc, et
- un dispositif central (O) servant à distribuer des données, en particulier des données relatives à des logiciels et/ou à des configurations,
**caractérisé en ce que**
- les données peuvent être transférées par le dispositif central (0) au premier abonné mobile (A, E),
- une liaison de communication spontanée peut être établie entre le premier abonné mobile et le deuxième abonné mobile, et
- les données ou des parties de ces dernières du premier abonné mobile (A, E) peuvent être demandées par le deuxième abonné mobile (B, C, D, F, G) par l'intermédiaire de la liaison de communication spontanée,
- sachant que les données peuvent être demandées automatiquement au premier abonné mobile (A, E) par le deuxième abonné mobile (B, C, D, F, G), lorsque les deux abonnés mobiles établissent une communication spontanée, et
- sachant que la distribution des données comporte un jeu de paramètres mis à jour et se fait au niveau d'une masse critique et correctement répartie de premiers abonnés mobiles (A, E) en utilisant les positions des appareils connus.

7. Réseau de données selon la revendication 6, sachant qu'une installation ou une préparation peut être lancée automatiquement dans l'un des abonnés mobiles, lorsque l'abonné mobile se voit transférer intégralement les données.

8. Réseau de données selon l'une quelconque des revendications 6 ou 7, sachant que la communication spontanée peut être établie entre les abonnés mobiles au moyen du Bluetooth, d'un USB ou d'un réseau LAN sans fil.

9. Réseau de données selon l'une quelconque des revendications 6 à 8, lequel présente un dispositif de sécurité, qui permet de vérifier la communication spontanée.

10. Réseau de données selon la revendication 9, sachant qu'une signature du poste central (0) ou d'un fabricant d'appareils peut être transférée dans le cadre de la communication spontanée.
